# EUROPEAN PATENT APPLICATION

(11) **EP 4 838 152 A1**
(43) Date of publication of application: **11.11.2026**
(21) Application number: 26747456.7
(22) Date of filing: 15.01.2026
(51) Int. Cl.: F25B 41/40, F16L 13/08

(54) **REFRIGERANT PIPING AND REFRIGERATION DEVICE**

(30) Priority: 13.03.2025 JP 2025040432
(71) Applicant: Daikin Industries, Ltd., Osaka-shi, Osaka 530-0001 (JP)
(72) Inventor: HAMADATE, Junichi, Osaka-shi, Osaka 530-0001 (JP); KOIKE, Fumiaki, Osaka-shi, Osaka 530-0001 (JP)
(74) Representative: Hoffmann Eitle
(86) International application number: PCT/JP2026/001035
(87) International publication number: WO 2026/191336

(57) **Abstract**

A refrigerant pipe 110 constituting a refrigeration apparatus 100 includes a first pipe portion 10 made of aluminum or an aluminum alloy, and a second pipe portion 20 including a first portion 21 made of stainless steel and having a first end 21a on one side in an axial direction, the second pipe portion including a second portion 22 made of copper or a copper alloy and extending from the first end 21a to the one side in the axial direction, in which the first pipe portion 10 and the second pipe portion 20 include a first region A1 in which the first pipe portion 10 and the first portion 21 overlap each other in a radial direction, and a second region A2 in which the first pipe portion 10 and the second portion 22 overlap each other in the radial direction, and an inner peripheral surface 13 at an end 12 of the first pipe portion 10 and an outer peripheral surface 25 of the second portion 22 are joined in the second region A2.

## Description

### TECHNICAL FIELD

The present disclosure relates to a refrigerant pipe and a refrigeration apparatus.

### BACKGROUND ART

Conventionally, a refrigerant pipe used in a refrigeration apparatus sometimes has a portion including a copper pipe and a portion including an aluminum pipe (see Patent Literature 1). A refrigerant pipe disclosed in Patent Literature 1 suppresses corrosion (galvanic corrosion) of an aluminum pipe by connecting a copper pipe and the aluminum pipe via a stainless pipe.

### CITATION LIST

### [PATENT LITERATURE]

PATENT LITERATURE 1: Japanese Laid-Open Patent Publication No. 2024-047966

### SUMMARY OF THE INVENTION

### [TECHNICAL PROBLEM]

In a refrigerant pipe in which a copper pipe and an aluminum pipe are connected via a stainless pipe, it is difficult to ensure joining strength at a joint portion between the stainless pipe and the aluminum pipe.

An object of the present disclosure is, in a refrigerant pipe in which a copper pipe and an aluminum pipe are connected via a stainless pipe, to ensure joining strength at a joint portion between the stainless pipe and the aluminum pipe.

### [SOLUTION TO PROBLEM]

(1) A refrigerant pipe of the present disclosure constituting a refrigeration apparatus includes a first pipe portion made of aluminum or an aluminum alloy, and a second pipe portion including a first portion made of stainless steel and having a first end on one side in an axial direction, the second pipe portion including a second portion made of copper or a copper alloy and extending from the first end to the one side in the axial direction, in which the first pipe portion and the second pipe portion include a first region in which the first pipe portion and the first portion overlap each other in a radial direction, and a second region in which the first pipe portion and the second portion overlap each other in the radial direction, and an inner peripheral surface at an end of the first pipe portion and an outer peripheral surface of the second portion are joined in the second region.
   In the refrigerant pipe of the present disclosure, since the aluminum pipe and the stainless pipe are joined via the copper pipe, the joining strength between the first pipe portion and the second pipe portion can be secured. Since the copper second portion is not exposed to the outside, it is possible to suppress galvanic corrosion of the aluminum pipe caused by adhesion of moisture to the surface of the copper pipe.
(2) In the refrigerant pipe according to (1) of the present disclosure, the inner peripheral surface and the outer peripheral surface are preferably joined by a brazing material, and a portion between the first pipe portion and the first portion in the first region and a portion between the first pipe portion and the second portion in the second region are preferably filled with the brazing material.
   In the refrigerant pipe having the above configuration, entry of moisture into the second region can be suppressed by the brazing material. As a result, it is possible to suppress the occurrence of galvanic corrosion in the portion where the first pipe portion and the second pipe portion are joined.
(3) In the refrigerant pipe according to (2) of the present disclosure, a formation length of the first region in the axial direction preferably is 50% or less of a formation length of the second region in the axial direction.
   The refrigerant pipe having the above configuration can reduce the amount of the brazing material filling the portion between the first pipe portion and the first portion in the first region. As a result, it is possible to suppress the trouble required for the work of brazing.
(4) In the refrigerant pipe according to aspects of (1) to (3) of the present disclosure, the first pipe portion preferably has a flared portion formed at the end, and the flared portion in a use state preferably is positioned with an opening side facing downward.
   In the refrigerant pipe having the above configuration, it is possible to suppress the entry of moisture into the second region from the end of the first pipe portion on the side to which the second pipe portion is joined in the use state. As a result, the refrigerant pipe of the present disclosure can suppress the occurrence of galvanic corrosion in the portion where the first pipe portion and the second pipe portion are joined.
(5) In the refrigerant pipe according to aspects of (1) to (4) of the present disclosure, the first portion preferably further includes a second end on another side in the axial direction, and the second pipe portion preferably further includes a third portion made of copper or a copper alloy and extending from the second end to the another side in the axial direction.
   The refrigerant pipe having the above configuration can facilitate connection between the aluminum pipe and the copper pipe via the stainless pipe by providing portions made of copper at both ends of the second pipe portion in the axial direction.
(6) In the refrigerant pipe according to aspects (1) to (5) of the present disclosure, the second pipe portion preferably has a boundary between the first portion and the second portion, and an outer diameter of the boundary is preferably equal to outer diameters of the first portion and the second portion.
   The refrigerant pipe having the above configuration can facilitate insertion of the second pipe portion into the first pipe portion, and can suppress a gap between the first pipe portion and the second pipe portion.
(7) A refrigeration apparatus of the present disclosure includes the refrigerant pipe according to any of aspects (1) to (6).

The refrigeration apparatus of the present disclosure can suppress the occurrence of galvanic corrosion in the refrigerant pipe in the refrigeration apparatus including the refrigerant pipe in which the aluminum pipe and the copper pipe are connected via the stainless pipe.

### BRIEF DESCRIPTION OF DRAWINGS

[FIG. 1] FIG. 1 is a schematic diagram of a refrigeration apparatus according to an embodiment of the present disclosure.
[FIG. 2] FIG. 2 is a schematic diagram of a refrigerant pipe according to the embodiment of the present disclosure.
[FIG. 3] FIG. 3 is a schematic diagram schematically showing a first pipe portion constituting the refrigerant pipe of the present disclosure.
[FIG. 4] FIG. 4 is a schematic diagram schematically showing a second pipe portion constituting the refrigerant pipe of the present disclosure.
[FIG. 5] FIG. 5 is a schematic partial sectional view of the refrigerant pipe according to the embodiment of the present disclosure.

### DETAILED DESCRIPTION

Hereinafter, a refrigerant pipe of the present disclosure and a refrigeration apparatus including the refrigerant pipe will be described in detail with reference to the accompanying drawings. Note that the present disclosure should not be limited to the following exemplifications, and is intended to be illustrated by the claims and include meanings equivalent to the claims and any modification recited in the claims.

### [Overall configuration of refrigeration apparatus]

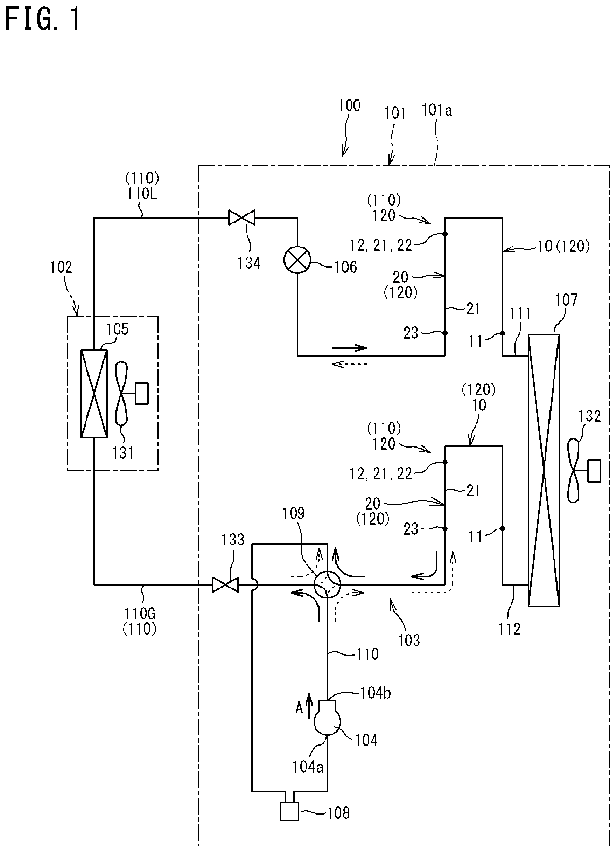

FIG. 1 is a schematic diagram of a refrigeration apparatus according to an embodiment of the present disclosure. A refrigeration apparatus 100 according to the present embodiment is an air conditioner that adjusts temperature and humidity in an air-conditioned room by a vapor compression refrigeration cycle. The refrigeration apparatus 100 includes an outdoor unit 101 installed outside the room, and an indoor unit 102 installed in the room. The outdoor unit 101 and the indoor unit 102 are connected to each other by a refrigerant pipe 110. Note that although the present embodiment illustrates the refrigeration apparatus 100 including one indoor unit 102, the refrigeration apparatus 100 of the present disclosure may include two or more indoor units 102. The refrigeration apparatus 100 according to the present embodiment is an air conditioner, but the refrigeration apparatus of the present disclosure is not limited to the air conditioner, and may be a refrigerator, a freezer, a hot water supplier, or the like.

The refrigeration apparatus 100 includes a refrigerant circuit 103 that executes a vapor compression refrigeration cycle. The refrigerant circuit 103 includes a plurality of element parts connected by the refrigerant pipe 110. The refrigerant pipe 110 includes a connection portion 120. Note that the configuration of the connection portion 120 will be described later in detail.

In the refrigerant circuit 103, the refrigerant pipe 110 includes a liquid refrigerant pipe 110L and a gas refrigerant pipe 110G. Liquid refrigerant flows through the liquid refrigerant pipe 110L, and gas refrigerant flows through the gas refrigerant pipe 110G. In the refrigeration apparatus 100 of the present disclosure, the liquid refrigerant pipe 110L and the gas refrigerant pipe 110G are made of copper (copper pipe).

The refrigerant circuit 103 includes, as a plurality of element parts, a compressor 104 that compresses a refrigerant to generate a high-temperature and high-pressure gas refrigerant, an indoor heat exchanger 105, an expansion valve 106 that decompresses the refrigerant, an outdoor heat exchanger 107, an accumulator 108, a four-way switching valve 109, and the like, which are connected by the refrigerant pipe 110.

The compressor 104 compresses a low-pressure gas refrigerant and discharges a high-pressure gas refrigerant. The compressor 104 has a suction port or a suction portion 104a and a discharge port or a discharge portion 104b. The low-pressure gas refrigerant is suctioned through the suction portion 104a. The high-pressure gas refrigerant is discharged through the discharge portion 104b in the direction of arrow A. Examples of the compressor 104 include various compressors such as a scroll compressor. The compressor 104 is housed in a casing 101a of the outdoor unit 101. The accumulator 108 is provided on the refrigerant pipe 110 on the suction side of the compressor 104.

The indoor heat exchanger 105 is provided in an indoor unit 102 and executes heat exchange between a refrigerant and indoor air. Examples of the indoor heat exchanger 105 include a fin-and-tube heat exchanger of a cross-fin type and a heat exchanger of a microchannel type. An indoor fan 131 is disposed near the indoor heat exchanger 105. The indoor fan 131 blows indoor air to the indoor heat exchanger 105 and sends conditioned air into the room.

The expansion valve 106 is disposed in the refrigerant pipe 110 between the outdoor heat exchanger 107 and the indoor heat exchanger 105. The expansion valve 106 expands the passing refrigerant to decompress the refrigerant to a predetermined pressure. The expansion valve 106 of the present embodiment is an electronic expansion valve.

The outdoor heat exchanger 107 executes heat exchange between the refrigerant and outdoor air. Examples of the outdoor heat exchanger 107 include a fin-and-tube heat exchanger of a cross-fin type and a heat exchanger of a microchannel type. In the refrigeration apparatus 100 of the present disclosure, the outdoor heat exchanger 107 is made of aluminum or aluminum alloy. The outdoor heat exchanger 107 includes a first connection pipe 111 and a second connection pipe 112 to which the refrigerant pipe 110 is connected. The first connection pipe 111 and the second connection pipe 112 are tubular portions, and are made of aluminum or an aluminum alloy similarly to the outdoor heat exchanger 107. An outdoor fan 132 is disposed near the outdoor heat exchanger 107. The outdoor fan 132 blows outdoor air to the outdoor heat exchanger 107.

The refrigerant pipe 110 is provided with the four-way switching valve 109 for switching a refrigerant flow path, a gas shutoff valve 133, and a liquid shutoff valve 134. By switching the four-way switching valve 109, the refrigeration apparatus 100 can reverse a flow of the refrigerant, and switch the refrigerant discharged from the compressor 104 to be supplied to the outdoor heat exchanger 107 or the indoor heat exchanger 105, and thus an operation can be switched between a cooling operation and a heating operation.

The gas shutoff valve 133 and the liquid shutoff valve 134 open or close a refrigerant path. The opening and closing are performed manually, for example. When the refrigeration apparatus 100 is installed, the gas shutoff valve 133 and the liquid shutoff valve 134 are closed to prevent the refrigerant enclosed in the outdoor unit 101 from leaking outside, for example. On the other hand, when the refrigeration apparatus 100 is used, the gas shutoff valve 133 and the liquid shutoff valve 134 are opened.

During the heating operation of the refrigeration apparatus 100, by switching the four-way switching valve 109 as indicated by a solid line, the refrigerant flows in a direction indicated by an arrow of the solid line. As a result, the high-pressure gas refrigerant discharged from the compressor 104 in the direction of arrow A passes through the four-way switching valve 109, then passes through the gas shutoff valve 133 that is opened, and then enters the indoor heat exchanger 105. The high-pressure gas refrigerant radiates heat while the high-pressure gas refrigerant turns into a high-pressure liquid refrigerant in the indoor heat exchanger 105. The high-pressure liquid refrigerant reaches the expansion valve 106 via the liquid shutoff valve 134 that is opened, and is decompressed by the expansion valve 106. The decompressed refrigerant reaches the outdoor heat exchanger 107, absorbs heat in the outdoor heat exchanger 107, and turns into a low-pressure gas refrigerant. The low-pressure gas refrigerant is suctioned into the compressor 104 via the four-way switching valve 109 and the accumulator 108. During the heating operation, the indoor heat exchanger 105 functions as a radiator, and the outdoor heat exchanger 107 functions as a heat absorber.

On the other hand, during the cooling operation, the flow of the refrigerant is reversed by switching the four-way switching valve 109 as indicated by a dotted line, and the refrigerant flows in a direction indicated by an arrow of the dotted line. As a result, the high-pressure gas refrigerant discharged from the compressor 104 in the direction of arrow A passes through the four-way switching valve 109, and then enters the outdoor heat exchanger 107. The high-pressure gas refrigerant radiates heat while the high-pressure gas refrigerant turns into a high-pressure liquid refrigerant in the outdoor heat exchanger 107. The high-pressure liquid refrigerant reaches the expansion valve 106 and is decompressed by the expansion valve 106. The decompressed refrigerant reaches the indoor heat exchanger 105 via the opened liquid shutoff valve 134, absorbs heat in the indoor heat exchanger 105, and turns into a low-pressure gas refrigerant. The low-pressure gas refrigerant is suctioned into the compressor 104 via the gas shutoff valve 133 that is opened, the four-way switching valve 109, and the accumulator 108. During the cooling operation, the indoor heat exchanger 105 functions as a heat absorber, and the outdoor heat exchanger 107 functions as a radiator.

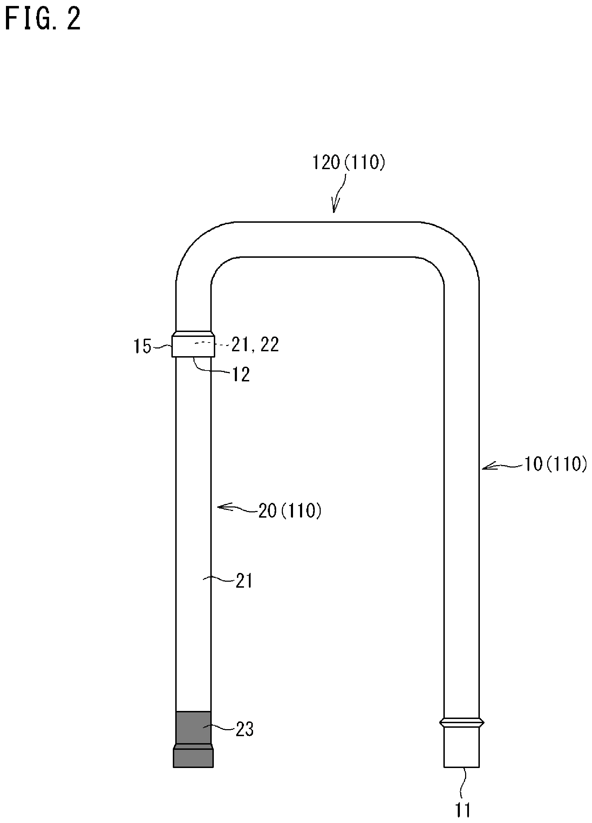

As shown in FIG. 1 and FIG. 2, the connection portion 120 of the present disclosure includes a first pipe portion 10 and a second pipe portion 20. The first pipe portion 10 and the second pipe portion 20 are a part of the refrigerant pipe 110.

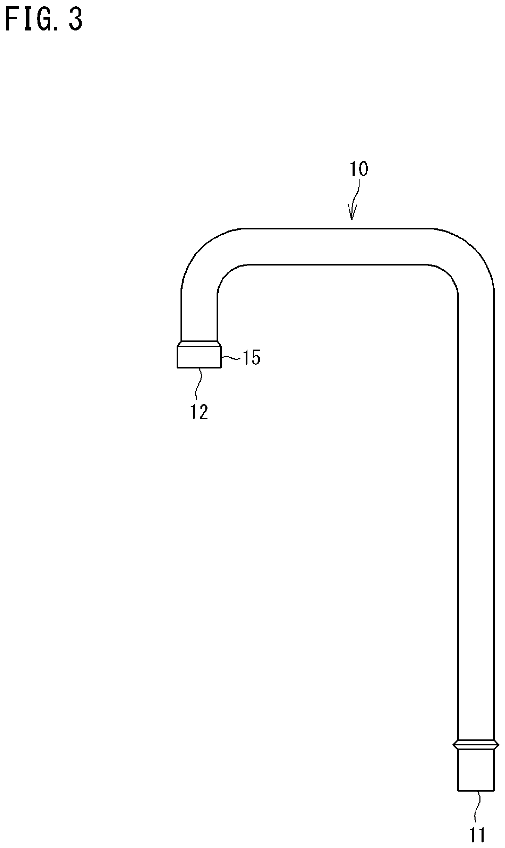

As shown in FIG. 2 and FIG. 3, the first pipe portion 10 is constituted by a pipe member having one end 11 and the other end 12. The first pipe portion 10 is made of aluminum or an aluminum alloy. The first pipe portion 10 according to the present embodiment is a curved pipe having a substantially C-shaped form, but the shape of the first pipe portion 10 constituting the refrigerant pipe 110 of the present disclosure is not limited to this shape.

As shown in FIG. 1, in the first pipe portion 10, the end 11 is connected to the first connection pipe 111 or the second connection pipe 112, and the end 12 is connected to the second pipe portion 20.

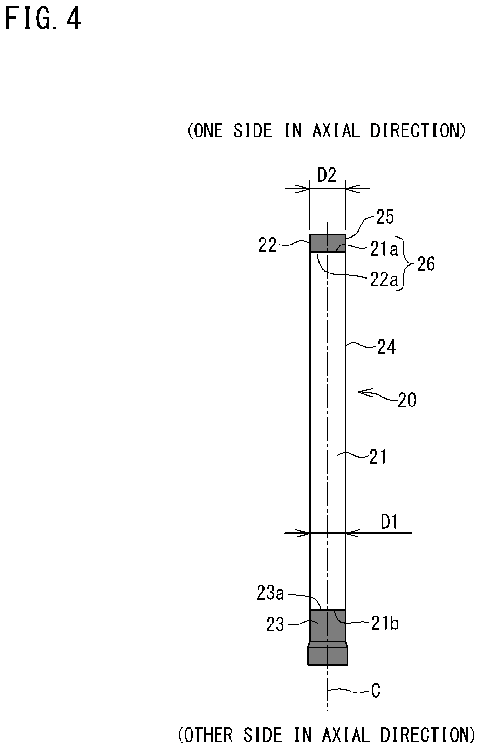

In the present description, each direction is defined with respect to the second pipe portion 20. As shown in FIG. 4, a direction along a center axis C of the second pipe portion 20 is an "axial direction". The "axial direction" includes a direction parallel to the center axis C. In the second pipe portion 20, one side in the axial direction (upper side in FIG. 2) is an upper side, and the other side in the axial direction (lower side in FIG. 2) opposite to the upper side is a lower side. A direction orthogonal to the center axis C is a "radial direction", and a direction along a circle centered on the center axis C is a "circumferential direction". In a case where the refrigeration apparatus 100 (see FIG. 1) is installed in a usable state, one side in the axial direction of the second pipe portion 20 is the upper side, and the other side in the axial direction of the second pipe portion 20 is the lower side.

As shown in FIG. 2 and FIG. 4, the second pipe portion 20 is constituted by a tubular member including a first portion 21, a second portion 22, and a third portion 23. The first portion 21 is made of stainless steel, and includes a first end 21a on one side in the axial direction and a second end 21b on the other side in the axial direction. Although the first portion 21 according to the present embodiment has a straight tubular shape, in the refrigerant pipe 110 of the present disclosure, a shape of the first portion 21 is not limited to this shape.

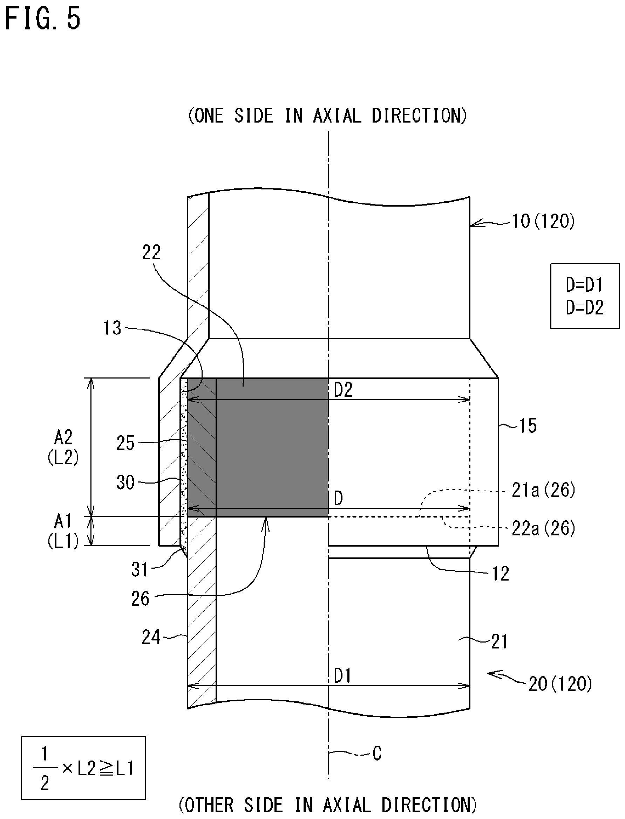

The second portion 22 is made of copper and extends from the first end 21a on the one side in the axial direction of the first portion 21 to the one side in the axial direction. The second portion 22 has a straight tubular shape and has an end 22a on the other side in the axial direction. In the second pipe portion 20 according to the present embodiment, an outer diameter of the second portion 22 (see an outer diameter D2 shown in FIG. 5) is the same as an outer diameter of the first portion 21 (see an outer diameter D1 shown in FIG. 5). The end 22a of the second portion 22 is joined to the first end 21a of the first portion 21.

As shown in FIG. 1 and FIG. 2, the end on one side in the axial direction of the second pipe portion 20 is connected to the end 12 of the first pipe portion 10. At this time, the end on the one side in the axial direction of the second pipe portion 20 connected to the end 12 includes the first portion 21 and the second portion 22.

As shown in FIG. 2 and FIG. 4, the third portion 23 is made of copper, and extends from the second end 21b on the other side in the axial direction of the first portion 21 to the other side in the axial direction. The third portion 23 has a straight tubular shape and has an end 23a on one side in the axial direction. The end 23a of the third portion 23 is joined to the second end 21b of the first portion 21.

In other words, the second pipe portion 20 includes the stainless steel first portion 21 disposed at a center in the axial direction, the copper second portion 22 disposed on one side in the axial direction of the first portion 21, and the copper third portion 23 disposed on the other side in the axial direction of the first portion 21.

As shown in FIG. 1 and FIG. 2, the third portion 23, which is the end on the other side in the axial direction of the second pipe portion 20, is connected to the ends of the liquid refrigerant pipe 110L and the gas refrigerant pipe 110G extending from the indoor unit 102 toward the outdoor heat exchanger 107. The third portion 23, the liquid refrigerant pipe 110L, and the gas refrigerant pipe 110G are brazed by manual work using a burner, for example.

### (Detailed configuration of connection portion)

FIG. 5 is a schematic partial sectional view of the refrigerant pipe according to the embodiment of the present disclosure. As shown in FIG. 5, the first pipe portion 10 has an inner peripheral surface 13 at the end 12. The second pipe portion 20 has an outer peripheral surface 24 of the first portion 21 and an outer peripheral surface 25 of the second portion 22. In the connection portion 120, the inner peripheral surface 13 and the outer peripheral surface 25 of the first pipe portion 10 and the second pipe portion 20 are joined by brazing. In the connection portion 120, a space between the first pipe portion 10 (inner peripheral surface 13) and the second portion 22 (outer peripheral surface 25) is filled with a brazing material 30. Therefore, a gap formed between the inner peripheral surface 13 and the outer peripheral surface 25 does not communicate with the outside of the refrigerant pipe 110. The first pipe portion 10 and the second portion 22 are brazed by manual work using a burner, for example.

In the connection portion 120, the inner peripheral surface 13 and the outer peripheral surface 24 of the first pipe portion 10 and the second pipe portion 20 are further joined by brazing. In the connection portion 120, a space between the first pipe portion 10 (inner peripheral surface 13) and the first portion 21 (outer peripheral surface 24) is filled with the brazing material 30. Therefore, in the connection portion 120 according to the present embodiment, a gap formed between the inner peripheral surface 13 and the outer peripheral surface 24 does not communicate with the outside of the refrigerant pipe 110. The first pipe portion 10 and the first portion 21 are simultaneously brazed when the first pipe portion 10 and the second portion 22 are brazed. In the refrigerant pipe 110 of the present disclosure, the space between the first pipe portion 10 (inner peripheral surface 13) and the first portion 21 (outer peripheral surface 24) is not required to be filled with the brazing material 30.

The connection portion 120 according to the present embodiment has a fillet 31 formed of the brazing material 30 on the other side in the axial direction of the end 12. The fillet 31 is continuously formed in the circumferential direction on the other side in the axial direction of the end 12. Therefore, in the connection portion 120 according to the present embodiment, an opening communicating with the outside is sealed by the fillet 31 (brazing material 30) between the first pipe portion 10 and the second pipe portion 20. The connection portion 120 having such a configuration can prevent moisture from entering the second portion 22 (outer peripheral surface 25) from the outside by the brazing material 30 (fillet 31).

In the connection portion 120, the third portion 23 is joined by brazing to the liquid refrigerant pipe 110L and the gas refrigerant pipe 110G. The third portion 23, the liquid refrigerant pipe 110L, and the gas refrigerant pipe 110G are all made of copper. Therefore, the third portion 23 can be easily brazed to the liquid refrigerant pipe 110L and the gas refrigerant pipe 110G.

As shown in FIG. 5, the connection portion 120 includes a first region A1 in which the first pipe portion 10 and the first portion 21 overlap each other in the radial direction, and a second region A2 in which the first pipe portion 10 and the second portion 22 overlap each other in the radial direction. In the present description, the formation length of the first region A1 in the axial direction is defined as a formation length L1, and the formation length of the second region A2 in the axial direction is defined as a formation length L2.

In the refrigerant pipe 110 according to the present embodiment, the formation length L1 of the first region A1 is preferably 50% or less of the formation length L2 of the second region A2. In a case where such a configuration is adopted, the volume of a space between the first pipe portion 10 and the first portion 21 in the first region A1 can be suppressed, and thus, the amount of the brazing material 30 filling the space can be reduced. As a result, it is possible to suppress the trouble required for the work of brazing the first pipe portion 10 and the second pipe portion 20.

### (Flared portion)

As shown in FIG. 5, the first pipe portion 10 has a flared portion 15 formed at the end 12. The second pipe portion 20 is inserted into the inside of the flared portion 15. In the first pipe portion 10, the flared portion 15 is opened to the other side in the axial direction. In refrigeration apparatus 100 of the present disclosure (see FIG. 1), as shown in FIG. 5, the first pipe portion 10 is disposed such that the opening of the flared portion 15 faces the lower side in a use state.

In a case where the flared portion 15 is opened to the lower side in the first pipe portion 10, moisture (dew condensation water or the like) flowing downward along the outer peripheral surface of the first pipe portion 10 further flows downward without entering the inside of the refrigerant pipe 110 from between the first pipe portion 10 and the second pipe portion 20. Therefore, in a case where the flared portion 15 is opened to the lower side, it is possible to prevent moisture from reaching the second portion 22.

### (Boundary)

In the connection portion 120, the second pipe portion 20 has a boundary 26 between the first portion 21 and the second portion 22. The boundary 26 is a portion where the first end 21a of the first portion 21 and the end 22a of the second portion 22 are in contact with each other. In the boundary 26, the outer peripheral surface 24 of the first portion 21 and the outer peripheral surface 25 of the second portion 22 are connected.

The second pipe portion 20 according to the present embodiment is manufactured by directly joining the first end 21a of the first portion 21 made of stainless steel and the end 22a on the other side in the axial direction of the second portion 22 made of copper. In the second pipe portion 20, the outer diameter D1 of the first portion 21 and the outer diameter D2 of the second portion 22 are the same diameter. In the second pipe portion 20 according to the present embodiment, the first end 21a and the end 22a having the same diameter are joined without interposing a pipe member such as a socket. In the second pipe portion 20 according to the present embodiment, an outer diameter D of the boundary 26 is the same as the outer diameter D1 and the outer diameter D2. The second pipe portion 20 according to the present embodiment is manufactured by welding (laser welding, TIG welding, or the like) the first end 21a and the end 22a. In a case where a protrusion such as a bead is generated in the boundary 26 by welding, the outer diameter D of the boundary 26 may be machined to be the same diameter as the outer diameter D1 and the outer diameter D2 by removing the bead or the like. In refrigerant pipe 110 of the present disclosure, the second pipe portion 20 may be formed by a method other than welding (for example, friction bonding or the like).

For example, in a case where the first portion 21 and the second portion 22 are joined via a tubular member (socket), the outer diameter of the socket is larger than the outer diameters of the first portion 21 and the second portion 22. In a case where the second pipe portion including such a socket is inserted into the flared portion 15, an inner diameter of the inner peripheral surface 13 of the flared portion 15 needs to be a dimension in consideration of a thickness corresponding to a pipe diameter of the socket. In this case, a volume of a space formed between the inner peripheral surface 13 and the second pipe portion is increased by the thickness. In a case where the second pipe portion including the socket is inserted into the flared portion 15, smooth insertion is hindered by a step of the socket. On the other hand, the second pipe portion 20 according to the present embodiment does not have a protrusion such as a bead at the boundary 26, and the second pipe portion 20 can be smoothly inserted into the end 12 (flared portion 15) of the first pipe portion 10. In a case where the second pipe portion 20 according to the present embodiment is used, it is not necessary to set the inner diameter of the inner peripheral surface 13 of the first pipe portion 10 is not required to be a dimension in consideration of the height of the protrusion such as a bead, and thus, the volume of the space between the first pipe portion 10 and the second pipe portion 20 can be suppressed. In this case, the amount of the brazing material 30 filling the space between the first pipe portion 10 and the second pipe portion 20 can be suppressed. In a case where the space is filled with the brazing material 30, it is necessary to supply an appropriate amount of brazing material to the space. This is because if the amount of the brazing material is not appropriate, shrinkage cavities are generated in the layer of the brazing material, and there is a possibility that moisture enters from the shrinkage cavities, and the risk of generation of the shrinkage cavities increases as the space increases. The connection portion 120 according to the present embodiment suppresses the occurrence of shrinkage cavities by suppressing the amount of the brazing material 30 used to fill the space between the first pipe portion 10 and the second pipe portion 20, and the risk of moisture entering from the connection portion 120 can be reduced.

### (Arrangement of aluminum pipe and copper pipe)

As shown in FIG. 1 and FIG. 2, in the refrigeration apparatus 100 according to the present embodiment, the first pipe portion 10 made of aluminum is disposed above the copper third portion 23 and the copper refrigerant pipe 110 (the liquid refrigerant pipe 110L and the gas refrigerant pipe 110G) connected to the copper third portion 23. The moisture (dew condensation water or the like) flowing downward along the outer peripheral surface of the copper pipe contains copper ions. The adhesion of moisture containing copper ions to the first pipe portion 10 causes corrosion (galvanic corrosion) of the first pipe portion 10. In the refrigeration apparatus 100 according to the present embodiment, the first pipe portion 10, which is disposed above the second pipe portion 20, can prevent moisture containing copper ions from adhering to the first pipe portion 10. Therefore, the refrigeration apparatus 100 according to the present embodiment can suppress the occurrence of galvanic corrosion in the first pipe portion 10 due to the adhesion of moisture containing copper ions.

### [Functional effects of embodiment]

(1) The refrigerant pipe 110 according to the present embodiment is a refrigerant pipe constituting the refrigeration apparatus 100, and includes the first pipe portion 10 made of aluminum or an aluminum alloy, and the second pipe portion 20 including the first portion 21 made of stainless steel and having the first end 21a on one side in the axial direction, and the second portion 22 made of copper or a copper alloy and extending from the first end 21a to the one side in the axial direction. The first pipe portion 10 and the second pipe portion 20 include the first region A1 in which the first pipe portion 10 and the first portion 21 overlap each other in the radial direction, and the second region A2 in which the first pipe portion 10 and the second portion 22 overlap each other in the radial direction. In the refrigerant pipe 110 according to the present embodiment, the inner peripheral surface 13 at the end 12 of the first pipe portion 10 and the outer peripheral surface 25 of the second portion 22 are joined in the second region A2.
   In the refrigerant pipe 110 according to the present embodiment, since the aluminum pipe and the stainless pipe are joined via the copper pipe, the joining strength between the first pipe portion 10 and the second pipe portion 20 can be secured. Since the copper second portion 22 is not exposed to the outside, it is possible to suppress galvanic corrosion of the aluminum pipe caused by adhesion of moisture to the surface of the copper pipe.
(2) In the refrigerant pipe 110 according to the present embodiment, the inner peripheral surface 13 and the outer peripheral surface 25 are joined by the brazing material 30. In the refrigerant pipe 110 according to the present embodiment, a portion between the first pipe portion 10 and the first portion 21 in the first region A1 and a portion between the first pipe portion 10 and the second portion 22 in the second region A2 are filled with the brazing material 30.
   In the refrigerant pipe 110 having such a configuration, entry of moisture into the second region A2 can be suppressed by the brazing material 30. As a result, it is possible to suppress the occurrence of galvanic corrosion in the portion where the first pipe portion 10 and the second pipe portion 20 are joined.
(3) In the refrigerant pipe 110 according to the present embodiment, the formation length L1 of the first region A1 in the axial direction is 50% or less of the formation length L2 of the second region A2 in the axial direction.
   The refrigerant pipe 110 having such a configuration can reduce the amount of the brazing material 30 filling the portion between the first pipe portion 10 and the first portion 21 in the first region A1. As a result, it is possible to suppress the trouble required for the work of brazing the refrigerant pipe 110.
(4) In the refrigerant pipe 110 according to the present embodiment, the first pipe portion 10 has the flared portion 15 formed at the end 12. In the refrigerant pipe 110 according to the present embodiment, the flared portion 15 in the use state is positioned with the opening side facing downward.
   In the use state, the refrigerant pipe 110 having such a configuration can suppress entry of moisture into the second region A2 from the end 12 of the first pipe portion 10 on the side to which the second pipe portion 20 is joined. As a result, the refrigerant pipe 110 according to the present embodiment can suppress the occurrence of galvanic corrosion in the portion where the first pipe portion 10 and the second pipe portion 20 are joined.
(5) In the refrigerant pipe 110 according to the present embodiment, the first portion 21 further includes the second end 21b on the other side in the axial direction. In the refrigerant pipe 110 according to the present embodiment, the second pipe portion 20 further includes the third portion 23 made of copper or a copper alloy and extending from the second end 21b to the other side in the axial direction.
   The refrigerant pipe 110 having such a configuration can facilitate connection between the aluminum pipe and the copper pipe via the stainless pipe by providing portions made of copper at both ends of the second pipe portion 20 in the axial direction.
(6) In the refrigerant pipe 110 according to the present embodiment, the second pipe portion 20 has the boundary 26 between the first portion 21 and the second portion 22. In the refrigerant pipe 110 according to the present embodiment, the outer diameter D of the boundary 26 is equal to the outer diameters D1 and D2 of the first portion 21 and the second portion 22.
   The refrigerant pipe 110 having such a configuration can facilitate insertion of the second pipe portion 20 into the first pipe portion 10, and can suppress a gap between the first pipe portion 10 and the second pipe portion 20.
(7) The refrigeration apparatus 100 according to the present embodiment includes the refrigerant pipe 110 according to the present embodiment.

The refrigeration apparatus 100 according to the present embodiment can suppress the occurrence of galvanic corrosion in the refrigerant pipe in the refrigeration apparatus 100 including the refrigerant pipe 110 in which the aluminum pipe and the copper pipe are connected via the stainless pipe.

While the embodiment has been described above, it will be understood that various changes in forms and details can be made without departing from the gist and scope of the claims.

### REFERENCE SIGNS LIST

- 10: first pipe portion
- 12: end
- 13: inner peripheral surface
- 15: flared portion
- 20: second pipe portion
- 21: first portion
- 21a: first end
- 21b: second end
- 22: second portion
- 23: third portion
- 25: outer peripheral surface
- 26: boundary
- 30: brazing material
- 100: refrigeration apparatus
- 103: refrigerant circuit
- 110: refrigerant pipe
- A1: first region
- A2: second region
- L1: formation length (of first region)
- L2: formation length (of second region)
- D: outer diameter (of boundary)
- D1: outer diameter (of first portion)
- D2: outer diameter (of second portion)

## Claims

1. A refrigerant pipe (110) constituting a refrigeration apparatus (100), the refrigerant pipe comprising:
a first pipe portion (10) made of aluminum or an aluminum alloy; and
a second pipe portion (20) including a first portion (21) made of stainless steel and having a first end (21a) on one side in an axial direction, the second pipe portion including a second portion (22) made of copper or a copper alloy and extending from the first end (21a) to the one side in the axial direction,
wherein the first pipe portion (10) and the second pipe portion (20) include
a first region (A1) in which the first pipe portion (10) and the first portion (21) overlap each other in a radial direction, and
a second region (A2) in which the first pipe portion (10) and the second portion (22) overlap each other in the radial direction, and
an inner peripheral surface (13) at an end (12) of the first pipe portion (10) and an outer peripheral surface (25) of the second portion (22) are joined in the second region (A2).

2. The refrigerant pipe (110) according to claim 1, wherein
the inner peripheral surface (13) and the outer peripheral surface (25) are joined by a brazing material (30), and
a portion between the first pipe portion (10) and the first portion (21) in the first region (A1) and a portion between the first pipe portion (10) and the second portion (22) in the second region (A2) are filled with the brazing material (30).

3. The refrigerant pipe (110) according to claim 2, wherein a formation length (L1) of the first region (A1) in the axial direction is 50% or less of a formation length (L2) of the second region (A2) in the axial direction.

4. The refrigerant pipe (110) according to claim 1 or 2, wherein
the first pipe portion (10) has a flared portion (15) formed at the end (12), and
the flared portion (15) in a use state is positioned with an opening side facing downward.

5. The refrigerant pipe (110) according to claim 1 or 2, wherein
the first portion (21) further includes a second end (21b) on another side in the axial direction, and
the second pipe portion (20) further includes a third portion (23) made of copper or a copper alloy and extending from the second end (21b) to the another side in the axial direction.

6. The refrigerant pipe (110) according to claim 1 or 2, wherein
the second pipe portion (20) has a boundary (26) between the first portion (21) and the second portion (22), and
an outer diameter (D) of the boundary (26) is equal to outer diameters (D1, D2) of the first portion (21) and the second portion (22).

7. A refrigeration apparatus (100) comprising the refrigerant pipe (110) according to claim 1 or 2.
